# EUROPEAN PATENT APPLICATION

(11) **EP 4 683 429 A1**
(43) Date of publication of application: **21.01.2026**
(21) Application number: 25185490.7
(22) Date of filing: 26.06.2025
(51) Int. Cl.: H05B 6/64

(54) **HEATING COOKER**

(30) Priority: 17.07.2024 JP 2024113877
(71) Applicant: Sharp Kabushiki Kaisha, Sakai City, Osaka 590-8522 (JP)
(72) Inventor: ASAMI, Shinji, Sakai City, 590-8522 (JP)
(74) Representative: Treeby, Philip David William

(57) **Abstract**

A heating cooker includes a housing having a heating cooking chamber, a table arranged in the heating cooking chamber and having an arrangement surface, and a placing table arranged on the arrangement surface. The arrangement surface has two protruding portions arranged at positions separated from each other in a circumferential direction about a central axis of the arrangement surface in plan view.

## Description

### BACKGROUND OF THE INVENTION

### 1. TECHNICAL FIELD

The present disclosure relates to a heating cooker.

### 2. DESCRIPTION OF THE RELATED ART

JP H11-159771 A describes a microwave oven in which a wire rack is placed on a turntable in a cooking chamber.

### SUMMARY OF THE INVENTION

In a heating cooker such as a microwave oven or an oven, for example, there is a demand for positioning a placing table arranged on a turntable with high accuracy, and a demand for suppressing displacement and posture change of the placing table.

An object of the present disclosure is, for example, to provide a suitable heating cooker in which a placing table is arranged on a table.

In one aspect of the present disclosure, a heating cooker includes a housing having a heating cooking chamber, a table arranged in the heating cooking chamber and having an arrangement surface, and a placing table arranged on the arrangement surface. The arrangement surface has two protruding portions arranged at positions separated from each other in a circumferential direction about a central axis of the arrangement surface in plan view.

According to the present disclosure, for example, it is possible to provide a suitable heating cooker in which a placing table is arranged on a table.

### BRIEF DESCRIPTION OF THE DRAWINGS

FIG. 1 is a schematic perspective view of a heating cooker according to a first embodiment;
FIG. 2 is a schematic front view of the heating cooker according to the first embodiment drawn with a door shown transparent;
FIG. 3 is a schematic front view of the heating cooker according to the first embodiment in which the door is shown transparent and drawing of a tray is omitted;
FIG. 4 is a schematic front view of the heating cooker according to the first embodiment in which the door is shown transparent and drawing of a placing table is omitted;
FIG. 5 is a schematic plan view of the placing table, the tray, and a table in the first embodiment;
FIG. 6 is a schematic side view of the placing table, the tray, and the table illustrating a cross section of a VI-VI portion in FIG. 5;
FIG. 7 is a schematic cross-sectional view in which a part of FIG. 6 is enlarged;
FIG. 8 is a schematic perspective view of the placing table, the tray, and the table in the first embodiment;
FIG. 9 is a schematic plan view of the tray and the table in the first embodiment;
FIG. 10 is a schematic perspective view of the tray and the table in the first embodiment;
FIG. 11 is a schematic perspective view of the table in the first embodiment;
FIG. 12 is a schematic plan view of the table in the first embodiment;
FIG. 13 is a schematic perspective view of the placing table in the first embodiment;
FIG. 14 is a schematic perspective view of the placing table in the first embodiment;
FIG. 15 is a schematic perspective view of the tray in the first embodiment;
FIG. 16 is a schematic front view of the heating cooker according to a second embodiment drawn with the door shown transparent;
FIG. 17 is a schematic plan view of the table in a first variation;
FIG. 18 is a schematic plan view of the table in a second variation;
FIG. 19 is a schematic plan view of the table in a third variation; and
FIG. 20 is a schematic plan view of the table in a fourth variation.

### DETAILED DESCRIPTION

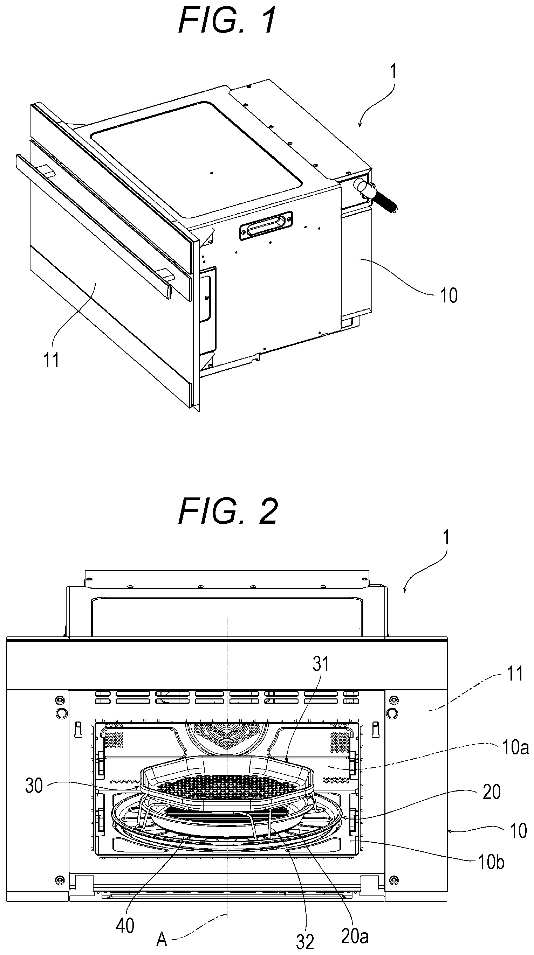

Hereinafter, a heating cooker 1(see FIG. 1) according to an embodiment of the present disclosure will be described in detail with reference to the drawings. Note that, in description below, members having substantially common functions are referred to by the same reference numerals, and description is incorporated. In a plan view of the heating cooker, a side provided with a door of the heating cooker is referred to as a front side, a side opposite in a front-rear direction to the front side is referred to as a back side, and a direction perpendicular to the front-rear direction is referred to as a width direction. A direction perpendicular to the front-rear direction and the width direction is defined as a height direction. The height direction of the heating cooker installed on a horizontal floor surface is parallel to a vertical direction.

In the present disclosure, the "heating cooker" generally refers to, for example, a device for heating and cooking a food material or the like. The heating cooker generally includes a main body having a heating cooking chamber, and a heating mechanism for heating a food material or the like placed in the heating cooking chamber. The heating mechanism is not particularly limited as long as the heating mechanism can heat a food material or the like. The heating mechanism may be, for example, a mechanism that heats a food material or the like arranged in the heating cooking chamber by heating the entire heating cooking chamber. The heating mechanism may be, for example, a mechanism that directly heats a food material or the like arranged in the heating cooking chamber. Specifically, the heating mechanism may be, for example, a microwave generating mechanism that generates a microwave and irradiates a food material or the like with the microwave. The heating mechanism may be configured by, for example, a resistance heating type heater. The heating cooker may include, for example, a plurality of types of heating mechanisms including a microwave generating mechanism that generates a microwave, a resistance heating type heater, and the like. The heating cooker may be for heating and cooking a food material or the like with a microwave, for example. The heating cooker may be for directly or indirectly heating and cooking a food material or the like by a resistance heating type heater. The heating cooker may heat a food material or the like with radiant heat from a resistance heating type heater and a microwave. The heating cooker may be a device referred to as what is called a microwave oven or oven.

### FIRST EMBODIMENT

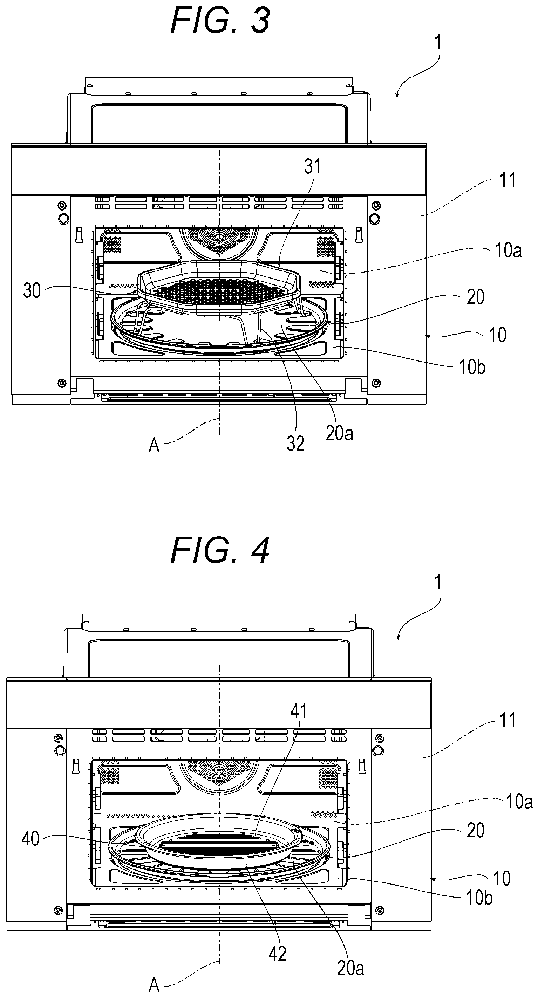

FIG. 1 is a schematic perspective view of a heating cooker 1 according to a first embodiment. FIG. 2 is a schematic front view of the heating cooker 1 according to the first embodiment drawn with a door 11 shown transparent. FIG. 3 is a schematic front view of the heating cooker 1 according to the first embodiment in which the door 11 is shown transparent and drawing of a tray 40 is omitted. FIG. 4 is a schematic front view of the heating cooker 1 according to the first embodiment in which the door 11 is shown transparent and drawing of a placing table 30 is omitted.

### SCHEMATIC CONFIGURATION OF HEATING COOKER 1

As illustrated in FIGS. 1 to 3, the heating cooker 1 includes a housing 10. As illustrated in FIG. 2, the housing 10 includes a heating cooking chamber 10a. The heating cooking chamber 10a is opened toward the front side. The door 11 is attached to the housing 10. The door 11 is provided to be able to open and close the heating cooking chamber 10a. Specifically, the door 11 is rotatably attached to a lower portion of the housing 10. The heating cooking chamber 10a can be opened and closed by rotating an upper portion of the door 11 about a central axis extending in a horizontal direction.

The heating cooker 1 has a heating mechanism (not illustrated). The heating mechanism preferably includes, for example, at least one of a microwave generating mechanism that generates a microwave and a resistance heating type heater.

The heating cooker 1 has a table 20. The table 20 is arranged in the heating cooking chamber 10a. The table 20 is arranged on a bottom surface 10b of the heating cooking chamber 10a. The table 20 may be provided so as not to be detachable from the housing 10, but in the present embodiment, the table 20 is provided so as to be detachable from the housing 10. The table 20 is provided so as to be relatively rotatable with respect to the housing 10 about a central axis A along the height direction. The heating cooker 1 is provided with a rotation mechanism (not illustrated) that rotates the table 20. The rotation mechanism is provided in the housing 10. The rotation mechanism rotates the table 20 about the central axis A. For this reason, the table 20 may be referred to as, for example, a turntable or a rotary table.

However, the present disclosure is not limited to this configuration. In the present disclosure, the table may be provided so as not to be rotatable with respect to the housing. The table may be detachably provided with respect to the housing.

The table 20 has an arrangement surface 20a facing the heating cooking chamber 10a side (upper side). The placing table 30 is arranged on the arrangement surface 20a.

The placing table 30 can be put in and taken out of the heating cooking chamber 10a. The placing table 30 is provided separately from the table 20. The placing table 30 includes a placing portion 31 and a plurality of leg portions 32. The placing portion 31 is, for example, a portion for placing food or the like. The placing portion 31 is located above the arrangement surface 20a. The placing portion 31 is separated from the arrangement surface 20a in the height direction. A plurality of the leg portions 32 are connected to the placing portion 31. Each of a plurality of the leg portions 32 extends downward (toward the arrangement surface 20a side) from the placing portion 31. The placing portion 31 is supported on the arrangement surface 20a by a plurality of the leg portions 32.

The tray 40 is arranged on the table 20. The tray 40 can be put in and taken out of the heating cooking chamber 10a. The tray 40 is provided separately from the table 20. The tray 40 can be arranged immediately above the table 20. In a state where the placing table 30 and the tray 40 are arranged on the table 20, the tray 40 is located below the placing portion 31. The tray 40 is located between the placing portion 31 and the table 20.

Next, each of the placing table 30, the tray 40, and the table 20 will be described in detail.

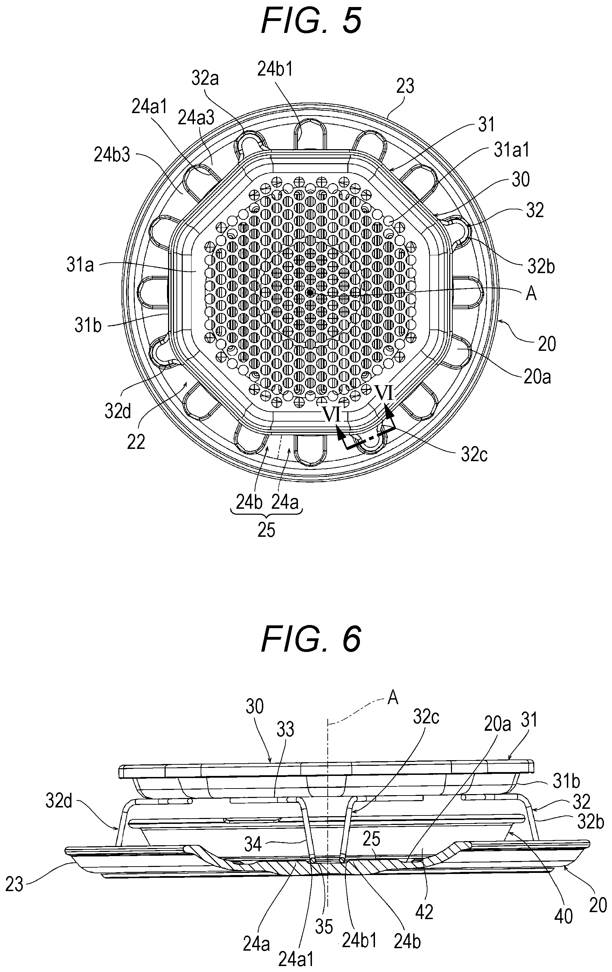

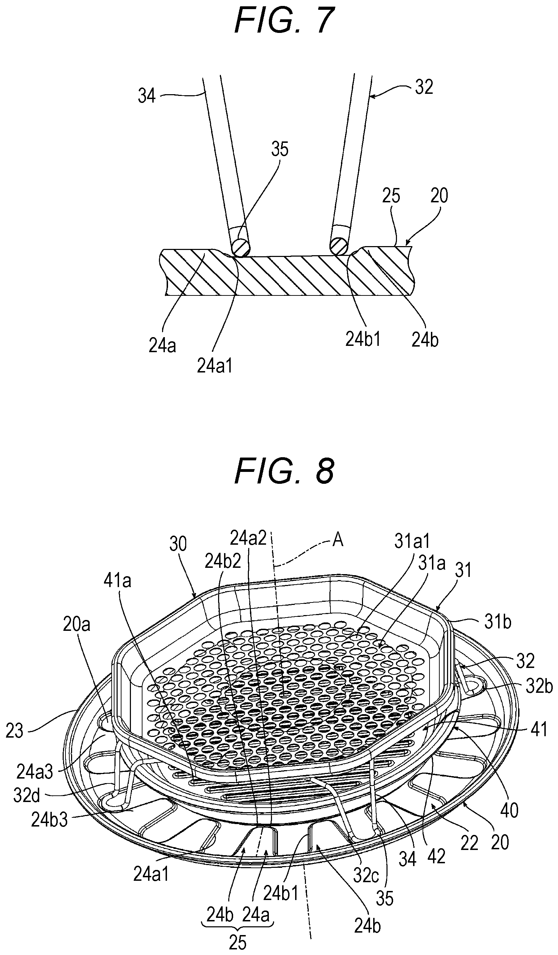

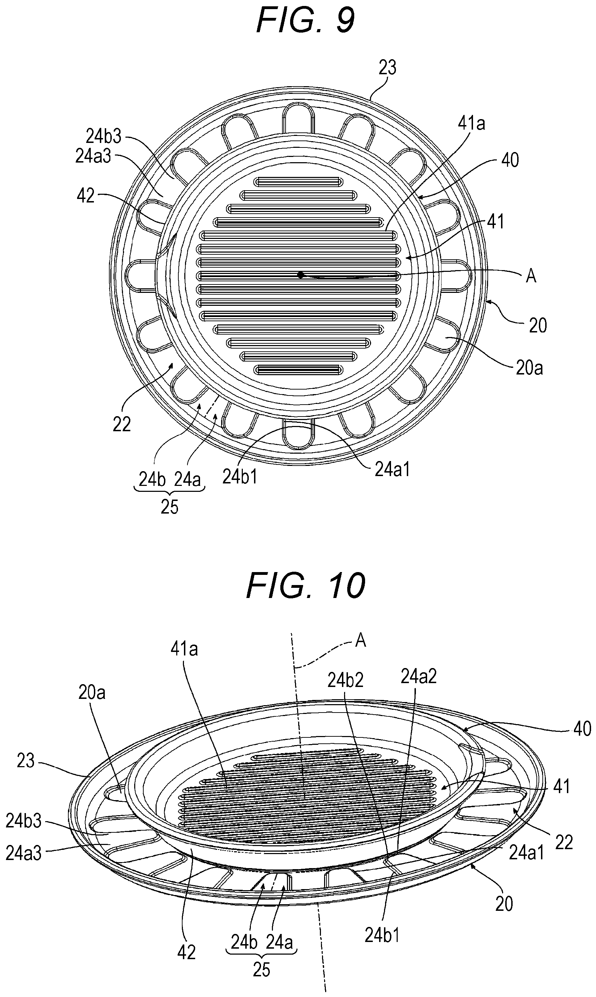

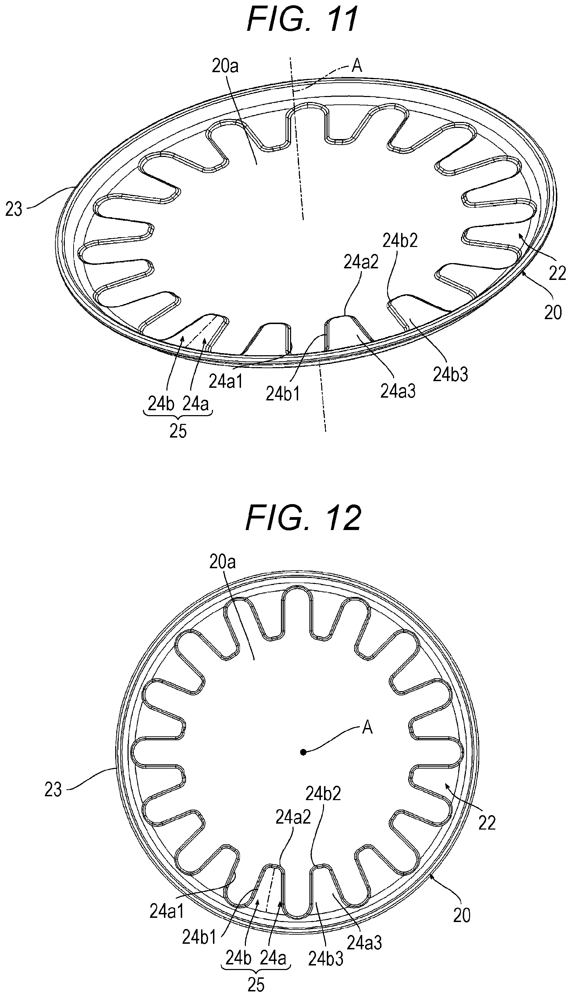

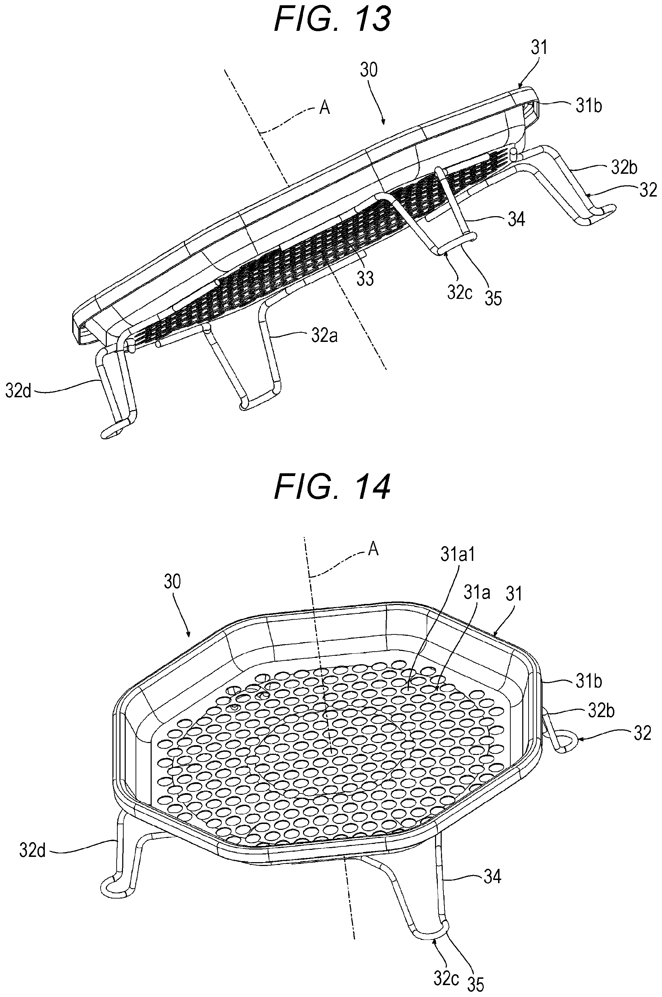

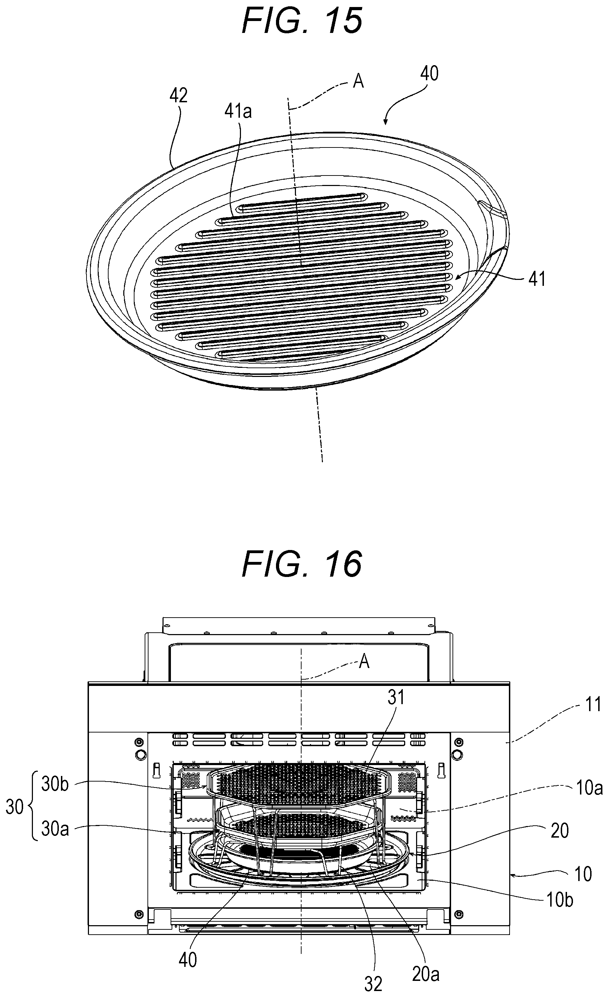

FIG. 5 is a schematic plan view of the placing table 30, the tray 40, and the table 20 in the first embodiment. FIG. 6 is a schematic side view of the placing table 30, the tray 40, and the table 20 illustrating a cross section of a VI-VI portion in FIG. 5. FIG. 7 is a schematic cross-sectional view in which a part of FIG. 6 is enlarged. FIG. 8 is a schematic perspective view of the placing table 30, the tray 40, and the table 20 in the first embodiment. FIG. 9 is a schematic plan view of the tray 40 and the table 20 in the first embodiment. FIG. 10 is a schematic perspective view of the tray 40 and the table 20 in the first embodiment. FIG. 11 is a schematic perspective view of the table 20 according to the first embodiment. FIG. 12 is a schematic plan view of the table 20 in the first embodiment. FIG. 13 is a schematic perspective view of the placing table 30 in the first embodiment. FIG. 14 is a schematic perspective view of the placing table 30 in the first embodiment. FIG. 15 is a schematic perspective view of the tray 40 in the first embodiment.

### PLACING TABLE 30

The placing table 30 will be mainly described in detail with reference to FIGS. 5 to 8, 13, and 14.

The placing table 30 is a member made from metal. The placing portion 31 of the placing table 30 has a dish shape whose periphery protrudes upward. As illustrated in FIG. 5, the placing portion 31 has a non-circular shape in plan view. The placing portion 31 has a shape having directionality in plan view. A planar view shape of the placing portion 31 may be, for example, a polygonal shape, an elliptical shape, an oval shape, or the like. In the present embodiment, specifically, a planar view shape of the placing portion 31 is a polygonal shape. A planar view shape of the placing portion 31 may be, for example, a triangular shape, a quadrangular shape, a pentagonal shape, a hexagonal shape, a heptagonal shape, an octagonal shape, or the like. More specifically, in the present embodiment, a planar view shape of the placing portion 31 is an octagonal shape.

Note that, in the present disclosure, a "polygon" includes a polygon having a corner portion that is rounded or chamfered.

The placing portion 31 includes a main body 31a and a side wall 31b. The main body 31a has a flat plate shape. A planar view shape of the main body 31a is a non-circular shape, specifically, a polygonal shape. A plurality of through holes 31a1 are formed in the main body 31a. For this reason, liquid such as water or oil generated from a food material arranged on the main body 31a falls below the placing table 30 via a plurality of the through holes 31a1. For example, liquid generated from a food material during heating of the food material may be referred to as "drip".

The side wall 31b is connected to a peripheral portion of the main body 31a. The side wall 31b extends upward from the main body 31a. The side wall 31b is annularly provided over the entire circumference of the main body 31a.

A plurality of the leg portions 32 are fixed to the placing portion 31. As illustrated in FIG. 6, each of a plurality of the leg portions 32 includes a fixed portion 33, a connecting portion 34, and an installation portion 35. The fixed portion 33 is a portion fixed to a lower surface of the placing portion 31. The installation portion 35 is a portion installed on the arrangement surface 20a of the table 20. The connecting portion 34 connects the fixed portion 33 and the installation portion 35. **In** the present embodiment, each of a plurality of the leg portions 32 is formed of one bent metal rod.

**In** a state where the placing table 30 is installed on the table 20, the fixed portion 33 extends substantially parallel to the arrangement surface 20a together with the placing portion 31. The fixed portion 33 includes two rod-shaped portions.

An upper end portion of the connecting portion 34 is connected to an outer end portion of the fixed portion 33. The connecting portion 34 extends downward from the fixed portion 33 in an up-down direction. Specifically, the connecting portion 34 extends obliquely downward to the outer side from an outer end portion of the fixed portion 33 toward the lower side. The connecting portion 34 includes two rod-shaped portions provided for two rod-shaped portions constituting the fixed portion 33.

As illustrated in FIG. 8, the installation portion 35 is connected to a lower end portion of the connecting portion 34. The installation portion 35 extends from a lower end portion of the connecting portion 34 along a direction in which the arrangement surface 20a extends (direction perpendicular to a direction in which the central axis A extends). The installation portion 35 extends outward in a radial direction about the central axis A from a connecting portion with the connecting portion 34. The installation portion 35 includes one rod-shaped portion having a curved portion. In the present embodiment, substantially the entire installation portion 35 is constituted by a curved portion curved in an arc shape.

One side end portion of a rod-shaped portion constituting the installation portion 35 is connected to a lower end portion of one of two rod-shaped portions constituting the connecting portion 34, and another side end portion is connected to a lower end portion of the other of the two rod-shaped portions constituting the connecting portion 34. Two rod-shaped portions constituting the connecting portion 34 are connected to each other by the installation portion 35.

As illustrated in FIG. 13, in the present embodiment, a plurality of leg portions 32 specifically include four leg portions of a first leg portion 32a, a second leg portion 32b, a third leg portion 32c, and a fourth leg portion 32d. Four of the leg portions 32a, 32b, 32c, and 32d are arranged at equal intervals in a circumferential direction with a space between each other. Four of the leg portions 32a, 32b, 32c, and 32d are arranged at every 90° about the central axis A. As described above, in the present embodiment, the placing portion 31 has an octagonal shape. Each of four of the leg portions 32a, 32b, 32c, and 32d is connected to a corner portion of the placing portion 31 having an octagonal shape. As described above, the number of the leg portions 32 is preferably a divisor of the number of corner portions of the placing portion 31. For example, the number of the leg portions 32 is a divisor of the number of corner portions of the placing portion 31, and is preferably less than the number of corner portions and three or more.

### TRAY 40

Next, the tray 40 will be described in detail with reference to FIGS. 4, 6, and 8 to 10.

The tray 40 is arranged on the table 20 below the placing portion 31. Specifically, the tray 40 includes a portion located below a region where a plurality of the through holes 31a1 are provided in the main body 31a. For this reason, a drip generated from a food material arranged on the placing portion 31 and dropped through a plurality of the through holes 31a1 is received by the tray 40. For this reason, the tray 40 may be referred to as a "drip tray". Note that, for example, a food material may be arranged on the tray 40. In a case of steaming and heating a food material placed on the placing portion 31, water or the like may be stored in the tray 40. In the case of smoking a food material placed on the placing portion 31, an object other than the food material such as a piece of wood may be arranged.

The tray 40 has a dish shape in which a central portion is recessed downward. As illustrated in FIG. 9, a planar view shape of the tray 40 is a circular shape. However, in the present disclosure, a planar view shape of the tray is not particularly limited. A planar view shape of the tray may be, for example, a polygonal shape, an elliptical shape, an oval shape, or the like. A planar view shape of the tray is preferably a rotationally symmetric shape.

As illustrated in FIG. 10, the tray 40 includes a main body 41 and a side wall 42. A planar view shape of the main body 41 is a circular shape. The main body 41 has a plate shape. A plurality of protruding portions 41a are provided on a surface of the main body 41. Each of a plurality of the protruding portions 41a has a linear shape having a longitudinal direction along one direction. A plurality of the protruding portions 41a are parallel to each other.

The side wall 42 is connected to a peripheral portion of the main body 41. The side wall 42 extends upward from the main body 41. The side wall 42 is annularly provided over the entire circumference of the main body 41.

### TABLE 20

Next, the table 20 will be described in detail with reference to FIGS. 3 to 12.

The table 20 is provided in a plate shape having a recessed portion recessed downward. As illustrated in FIG. 5, a planar view shape of the table 20 is a circular shape. As illustrated in FIG. 11, the table 20 includes a main body 22 and a side wall 23. The main body 22 has a substantially flat plate shape. A planar view shape of the main body 22 is a circular shape. The main body 22 is provided with the arrangement surface 20a.

The side wall 23 is connected to a peripheral portion of the main body 22. The side wall 23 extends upward from the main body 22 in the height direction. Specifically, the side wall 23 extends upward from a connecting portion with the main body 22 toward the outside in the radial direction.

### ARRANGEMENT SURFACE 20a

As illustrated in FIGS. 11 and 12, the arrangement surface 20a is provided with two protruding portions, a first protruding portion 24a and a second protruding portion 24b. The first protruding portion 24a and the second protruding portion 24b are arranged at positions separated from each other in a circumferential direction about the central axis A. The first protruding portion 24a and the second protruding portion 24b are provided at positions different from each other in the circumferential direction. The first protruding portion 24a and the second protruding portion 24b do not have a portion overlapping in the radial direction. As illustrated in FIG. 6, in side view, the first protruding portion 24a and the second protruding portion 24b face each other in the circumferential direction.

Note that the central axis A is equal to an axial center of the table 20. The central axis A is a straight line extending along the height direction by passing through the center in plan view of the table 20 whose planar view shape is a circular shape.

The first protruding portion 24a has a substantially trapezoidal shape in plan view. Specifically, the first protruding portion 24a has a right trapezoidal shape.

The first protruding portion 24a has a side surface 24a1, a side surface 24a2, and a top surface 24a3.

The side surface 24a1 faces the second protruding portion 24b side in the circumferential direction. The side surface 24a1 extends while being inclined with respect to the radial direction in a direction away from the second protruding portion 24b in the circumferential direction from the outer side toward the inner side in the radial direction. In plan view, the side surface 24a1 includes a central portion located at a central portion in the radial direction and extending substantially linearly, a curved portion located further on the inner side in the radial direction than the central portion and curved in a direction away from the second protruding portion 24b toward the inner side in the radial direction in the circumferential direction, and a curved portion located further on the outer side in the radial direction than the central portion and curved in a direction approaching the second protruding portion 24b toward the outer side in the radial direction in the circumferential direction. As illustrated in FIG. 7, the side surface 24a1 extends in a direction inclined along the height direction. Specifically, the side surface 24a1 extends in a direction inclined in a direction away from the second protruding portion 24b toward the upper side in side view.

As illustrated in FIG. 11, the side surface 24a2 extends substantially along the circumferential direction. The side surface 24a2 is perpendicular to the radial direction. In the present embodiment, a planar view shape of the side surface 24a2 is substantially linear.

As illustrated in FIG. 11, the top surface 24a3 is substantially parallel to the arrangement surface 20a. The top surface 24a3 is a flat surface.

As illustrated in FIG. 11, the second protruding portion 24b has a substantially trapezoidal shape in plan view. Specifically, the second protruding portion 24b has a right trapezoidal shape. The second protruding portion 24b and the first protruding portion 24a are arranged such that acute bottom angles in plan view face each other.

The second protruding portion 24b has a side surface 24b1, a side surface 24b2, and a top surface 24b3.

The side surface 24b1 faces the first protruding portion 24a side in the circumferential direction. The side surface 24b1 extends while being inclined with respect to the radial direction in a direction away from the first protruding portion 24a in the circumferential direction from the outer side toward the inner side in the radial direction. In plan view, the side surface 24b1 includes a central portion located at a central portion in the radial direction and extending substantially linearly, a curved portion located further on the inner side in the radial direction than the central portion and curved in a direction away from the first protruding portion 24a toward the inner side in the radial direction in the circumferential direction, and a curved portion located further on the outer side in the radial direction than the central portion and curved in a direction approaching the first protruding portion 24a toward the outer side in the radial direction in the circumferential direction. As illustrated in FIG. 7, the side surface 24b1 extends in a direction inclined along the height direction. Specifically, the side surface 24b1 extends in a direction inclined in a direction away from the first protruding portion 24a toward the upper side in side view.

As illustrated in FIG. 11, the side surface 24b2 extends substantially along the circumferential direction. The side surface 24b2 is perpendicular to the radial direction. In the present embodiment, a planar view shape of the side surface 24b2 is substantially linear.

A distance between the side surface 24b2 of the second protruding portion 24b and the central axis A and a distance between the side surface 24a2 of the first protruding portion 24a and the central axis A are substantially equal to each other.

As illustrated in FIG. 11, the top surface 24b3 is substantially parallel to the arrangement surface 20a. The top surface 24b3 is a flat surface.

Height of the second protruding portion 24b and height of the first protruding portion 24a are substantially equal to each other.

As illustrated in FIG. 11, in the present embodiment, a plurality of protruding portion pairs including two protruding portions, the first protruding portion 24a and the second protruding portion 24b are provided. A plurality of protruding portion pairs are arranged such that the first protruding portion 24a included in one of protruding portion pairs adjacent in the circumferential direction and the second protruding portion 24b included in another one are adjacent in the circumferential direction. A portion on the opposite side to the side surface 24a1 of the first protruding portion 24a is provided integrally with a portion on the opposite side to the side surface 24b1 of the second protruding portion 24b. By this, an integrated protruding portion 25 is formed by the first protruding portion 24a and the second protruding portion 24b. In the present embodiment, a plurality of the protruding portions 25 are arranged at intervals in the circumferential direction. The number of the protruding portions 25 is a natural number multiple of the number of the installation portions 35. The number of the protruding portions 25 is preferably twice or more the number of the installation portions 35. Specifically, in the present embodiment, the number of the protruding portions 25 is four times the number of the installation portions 35. A planar view shape of each of a plurality of the protruding portions 25 is a substantially isosceles trapezoidal shape. In plan view, the protruding portion 25 is substantially congruent to a portion formed between two of the protruding portions 25 adjacent in the circumferential direction.

### INSTALLATION MODE OF PLACING TABLE 30

As illustrated in FIG. 8, the installation portion 35 of the placing table 30 has substantially the same shape as a portion between the first protruding portion 24a and the second protruding portion 24b adjacent in the circumferential direction. Therefore, the installation portion 35 is fitted into a portion between the first protruding portion 24a and the second protruding portion 24b adjacent in the circumferential direction. In the present embodiment, as described above, the number of the protruding portions 25 is a natural number multiple of the number of the installation portions 35. For this reason, the placing table 30 can be installed on the table 20 in a mode in which the installation portion 35 of each of four of the leg portions 32a, 32b, 32c, and 32d is fitted in a portion between the first protruding portion 24a and the second protruding portion 24b adjacent in the circumferential direction.

As illustrated in FIG. 7, an outer shape of the installation portion 35 is substantially equal to a portion between the first protruding portion 24a and the second protruding portion 24b adjacent in the circumferential direction. A dimension of the installation portion 35 in the circumferential direction is substantially equal to a dimension in the circumferential direction of a portion between the first protruding portion 24a and the second protruding portion 24b adjacent in the circumferential direction. The installation portion 35 has a shape along the side surface 24a1 and the side surface 24b1.

Thickness of the installation portion 35 is larger than height of the first protruding portion 24a and the second protruding portion 24b. Height of the installation portion 35 is larger than height of the first protruding portion 24a and the second protruding portion 24b. Height of the installation portion 35 is preferably 1.1 times or more, more preferably 1.5 times or more height of the first protruding portion 24a and the second protruding portion 24b. Height of the installation portion 35 is preferably 3 times or less, more preferably 2.5 times or less height of the first protruding portion 24a and the second protruding portion 24b. **In** the present embodiment, height of the installation portion 35 is about twice height of the first protruding portion 24a and the second protruding portion 24b. Since a cross-sectional area of a rod-shaped portion constituting the installation portion 35 is circular, height of the center of the rod-shaped portion constituting the installation portion 35 is substantially equal to height of the first protruding portion 24a and the second protruding portion 24b. Therefore, height of a portion where a maximum dimension along the circumferential direction of the installation portion 35 in the height direction is substantially equal to height of the first protruding portion 24a and the second protruding portion 24b.

As described above, in the present embodiment, the arrangement surface 20a has two protruding portions, the first protruding portion 24a and the second protruding portion 24b, arranged at positions separated from each other in the circumferential direction. For this reason, the leg portion 32 of the placing table 30 can be prevented from being displaced in the circumferential direction relative to the table 20 by the first protruding portion 24a and the second protruding portion 24b. For this reason, for example, the placing table 30 can be easily arranged at a predetermined position with high accuracy. Further, for example, it is possible to prevent the placing table 30 from being displaced or rotated relative to the table 20 along with rotation of the table 20 or the like.

From the viewpoint of highly accurate arrangement of the placing table 30 and more effectively restricting displacement and rotation with respect to the table 20, it is preferable to provide a plurality of protruding portion pairs including the first protruding portions 24a and the second protruding portions 24b. A plurality of protruding portion pairs are preferably provided such that a plurality of the leg portions 32 are inserted into a portion between the first protruding portion 24a and the second protruding portion 24b constituting a protruding portion pair. Then, the leg portion 32 preferably has the installation portion 35 having a shape along the side surfaces 24a1 and 24b1.

From a similar viewpoint, the side surfaces 24a1 and 24b1 facing each other are preferably provided on both sides in the circumferential direction of the leg portion 32.

As described above, in order to suitably arrange the placing table 30 at a position where the placing table 30 is hardly displaced and rotated with respect to the table 20, it is preferable to place the placing table 30 on the table 20 by suitably matching a positional relationship between the leg portion 32 and the first protruding portion 24a and the second protruding portion 24b. In a case where the placing portion 31 of the placing table 30 is non-circular, the user can easily identify a position of the leg portion 32 of the placing table 30. In particular, in a case where the placing portion 31 has a polygonal shape and the leg portion 32 is connected to a corner portion of the placing portion 31, the user can easily identify a position of the leg portion 32. Therefore, the placing table 30 can be easily installed at a suitable position with respect to the table 20.

When the protruding portions 24a and 24b are provided on the arrangement surface 20a, flatness of the arrangement surface 20a tends to be lowered. Therefore, in a case where the placing table 30 and the like are not provided on the arrangement surface 20a, there is a possibility that it is difficult to arrange other members. In the present embodiment, the protruding portions 24a and 24b are provided with the top surfaces 24a3 and 24b3 parallel to the arrangement surface 20a. For this reason, other members may be suitably arranged. Furthermore, the top surfaces 24a3 and 24b3 are flat. For this reason, other members may be more suitably arranged. Moreover, as illustrated in FIG. 11, the protruding portions 24a and 24b are provided in an outer side portion in the radial direction of the arrangement surface 20a, and are not provided in an inner side portion in the radial direction. Therefore, a flat region is secured in an inner side portion in the radial direction than the protruding portions 24a and 24b in the arrangement surface 20a. Other members can be more stably arranged in this flat region.

### ARRANGEMENT MODE OF TRAY 40

As described above, distances between the central axis A and the side surface 24a2 of each of a plurality of the first protruding portions 24a and the side surface 24b2 of each of a plurality of the second protruding portions 24b are substantially equal to each other. Therefore, the tray 40 can be placed on the arrangement surface 20a so as to be in contact with the side surfaces 24a2 and 24b2. By installing the tray 40 in this manner, it is possible to suppress relative displacement of the tray 40 with respect to the table 20. The tray 40 can be held at an appropriate position with respect to the table 20.

Hereinafter, another example of a preferred embodiment of the present disclosure will be described. In description below, a member having substantially a common function as that of the first embodiment will be referred to by a common reference numeral, and will be omitted from description.

### SECOND EMBODIMENT

FIG. 16 is a schematic front view of the heating cooker according to a second embodiment drawn with the door 11 shown transparent.

In the first embodiment, the example in which only one placing table 30 is arranged is described. The second embodiment is different from the first embodiment in that, as the placing table 30, a plurality of placing tables including a placing table 30a and a placing table 30b are arranged on the table 20.

The leg portion 32 of the placing table 30a and the leg portion 32 of the placing table 30b are arranged on the arrangement surface 20a so as to be located between different ones of the protruding portions 24a and 24b of the table 20. For this reason, a positional relationship between the placing table 30a and the placing table 30b is less likely to change, and contact with each other may be suppressed.

Note that three or more placing tables may be arranged on the table.

### VARIATION

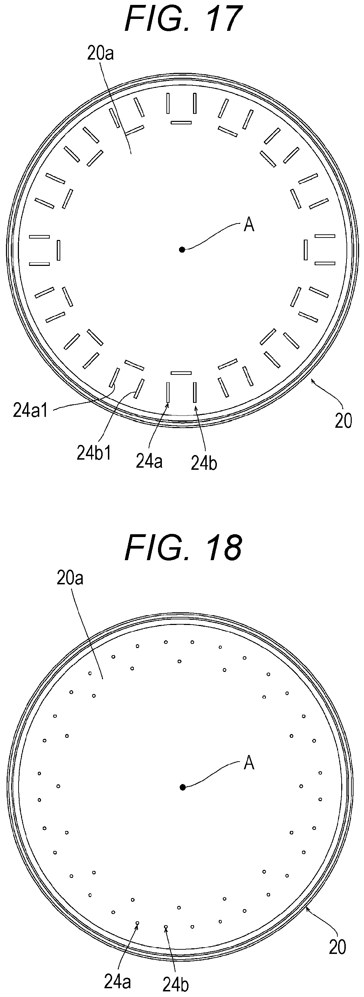

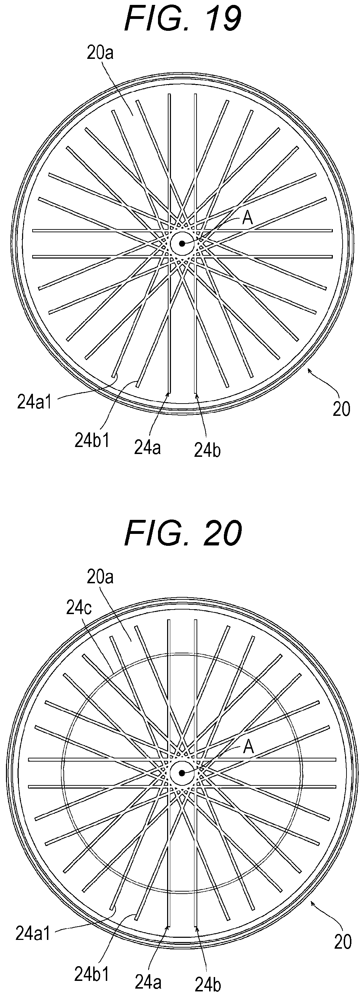

FIG. 17 is a schematic plan view of the table 20 in a first variation. FIG. 18 is a schematic plan view of the table 20 in a second variation. FIG. 19 is a schematic plan view of the table 20 in a third variation. FIG. 20 is a schematic plan view of the table 20 in a fourth variation.

As in the first variation illustrated in FIG. 17 and the second variation illustrated in FIG. 18, the first protruding portion 24a and the second protruding portion 24b may be provided separately. Also in the first variation and the second variation, substantially the same effect as that of the above embodiment can be obtained.

As in the third variation illustrated in FIG. 19, all of a plurality of the first protruding portions 24a and a plurality of the second protruding portions 24b may be integrally provided. Further, at least one of the first protruding portion 24a and the second protruding portion 24b may also be provided at a central portion of the arrangement surface 20a. Also in the third variation, the placing table 30 can be easily arranged at an appropriate position, and displacement and rotation of the placing table 30 can be suitably suppressed.

In the fourth variation illustrated in FIG. 20, a third protruding portion 24c is further provided in addition to the first protruding portion 24a and the second protruding portion 24b integrally provided in the third variation. The third protruding portion 24c is provided in an annular shape around the central axis A, specifically, in a ring shape in plan view. The third protruding portion 24c is higher than the first protruding portion 24a and the second protruding portion 24b. By providing the third protruding portion 24c, it is possible to perform prevention of displacement of the tray 40 and highly accurate positioning of the tray 40. From this viewpoint, a bottom surface of the tray 40 and an inner shape of the third protruding portion 24c are preferably substantially the same.

It should be understood that the embodiments disclosed herein are illustrative in all respects and not restrictive. The scope of the present disclosure is indicated not by the above description but by the claims, and it is intended that meanings equivalent to the claims and all changes within the scope are included. Further, configurations obtained by combining configurations of different embodiments described in the present description are also included in the scope of the present disclosure.

## Claims

1. A heating cooker comprising:
a housing having a heating cooking chamber;
a table arranged in the heating cooking chamber and having an arrangement surface; and
a placing table arranged on the arrangement surface, wherein
the arrangement surface has two protruding portions arranged at positions separated from each other in a circumferential direction around a central axis of the arrangement surface in plan view.

2. The heating cooker according to claim 1, further comprising a plurality of protruding portion pairs including the two protruding portions.

3. The heating cooker according to claim 1, wherein one protruding portion of the two protruding portions has a first side surface facing another protruding portion side and a second side surface facing the central axis side.

4. The heating cooker according to claim 1, wherein the protruding portion has a top surface parallel to the arrangement surface.

5. The heating cooker according to claim 3, wherein the two protruding portions are provided such that distances between the central axis and the second side surfaces of the two protruding portions are equal to each other.

6. The heating cooker according to claim 3, wherein
the placing table includes
a placing portion, and
a leg portion connected to the placing portion, and
the leg portion includes an installation portion along the first side surface.

7. The heating cooker according to claim 6, wherein thickness of the installation portion is larger than height of the protruding portion.

8. The heating cooker according to claim 6, wherein the placing portion is non-circular in plan view.

9. The heating cooker according to claim 6, wherein
the placing portion has a polygonal shape in plan view, and
the leg portion is connected to a corner portion of the placing portion.

10. The heating cooker according to claim 1, further comprising a tray arranged on the arrangement surface so as to be in contact with a side surface on the central axis side of each of the two protruding portions.
